# FASCICULE DE BREVET EUROPEEN

(11) **EP 4 074 011 B1**
(45) Date de publication et mention de la délivrance du brevet: **07.08.2024**
(21) Numéro de dépôt: 20845188.0
(22) Date de dépôt: 11.12.2020
(51) Int. Cl.: H04L 67/125, H01M 10/42, H01M 10/48, H04L 67/025

(54) **PLATEFORME DE GESTIONS DE MICRO SERVICES CONCERNANT LA GESTION D'UNE BATTERIE**
MIKRODIENSTVERWALTUNGSPLATTFORM FÜR BATTERIEMANAGEMENT
MICRO-SERVICE MANAGEMENT PLATFORM RELATING TO BATTERY MANAGEMENT

(30) Priorité: 13.12.2019 FR 1914436
(43) Date de publication de la demande: 19.10.2022
(73) Titulaire: SAFT, 92300 Levallois-Perret (FR)
(72) Inventeur: ALAIMO, Stéphane, 33200 BORDEAUX (FR)
(74) Mandataire: Bandpay & Greuter
(86) Numéro de dépôt international: PCT/FR2020/052404
(87) Numéro de publication internationale: WO 2021/116633

(56) Documents cités:
- WO-A1-2018/065629
- US-A1- 2017 201 425
- US-A1- 2018 164 791
- US-A1- 2018 295 187
- LVAREZ-VALERA HERNN H ET AL: "KaliGreen: A distributed Scheduler for Energy Saving", PROCEDIA COMPUTER SCIENCE, ELSEVIER, AMSTERDAM, NL, vol. 141, 5 November 2018 (2018-11-05), pages 223 - 230, XP085527631, ISSN: 1877-0509, DOI: 10.1016/J.PROCS.2018.10.172

## Description

### DOMAINE DE L'INVENTION

La présente invention concerne le domaine technique des plateformes de services utilisant des micro-services pour un système de contrôle-commande industriel.

### ARRIERE-PLAN TECHNIQUE

L'exécution des fonctions de gestion d'un système industriel complexe repose généralement sur une infrastructure informatique. Ces fonctions comprennent notamment le suivi opérationnel, la programmation et le diagnostic à distance des machines et des équipements, le suivi et diagnostic de production, ainsi que des interfaces homme/machine permettant et facilitant les interactions des opérateurs humains.

Par exemple, un système industriel peut être un système de gestion de batterie (BMS, acronyme de l'anglais Battery Management System) qui est un système de contrôle électronique qui a de multiples fonctions dans un système de stockage d'énergie basé sur une ou des batteries. Ces fonctions comprennent, mais ne sont pas limitées à, la surveillance de l'état de la batterie (état de charge, état de santé, température, courant électrique la traversant, etc...), le contrôle des connections de puissance de la batterie avec une charge, le contrôle de la charge, la surveillance de la sûreté de fonctionnement de la batterie et des fonctions assurant sa sûreté et sa sécurité.

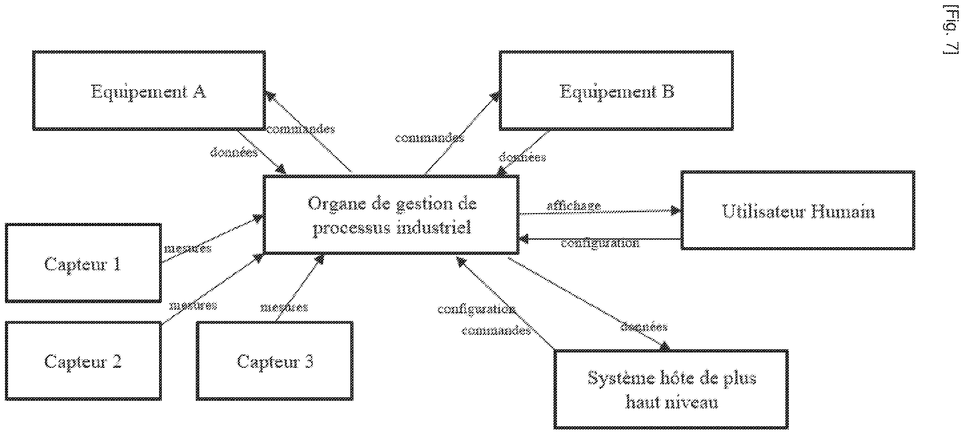

De façon générale, une infrastructure informatique de gestion d'un système industriel comprend une unité de gestion qui exécute les services et qui est connectée à un ou plusieurs réseaux sur lesquels les machines et équipements du système sont également connectés. Les machines et équipements transmettent à l'unité de gestion des informations les concernant, et l'unité de calcul exécute les fonctions métiers sur la base des informations reçues, et envoie des commandes aux machines et équipements. La figure 7 illustre un [exemple de système industriel dans lequel des équipements (A, B), des capteurs (1, 2, 3), un système hôte, un utilisateur sont reliés à un organe de gestion de processus industriel. Ce dernier reçoit par exemple des données, des mesures, des commandes de configuration, des configurations, et transmet par exemple des commandes, des données, des affichages... Les flux sont centralisés sur l'organe de gestion.

Or, le niveau de complexité des systèmes industriels supervisés peut atteindre un niveau tel qu'il devient difficile de garantir à la fois leur niveau de disponibilité et leur évolutivité (ajout d'un nouvel élément ou d'une fonction). En effet, : ils regroupent des sous-systèmes diversifiés, hétérogènes, ayant des interfaces variées (liaisons physiques de type série, Ethernet, CAN, sans-fils, et avec différents protocoles), différentes logiques métiers, des calculs algorithmiques et du stockage de données et sont traditionnellement implémentés de façon imbriquée dans une architecture monolithique. Toutes ces caractéristiques limitent leur évolutivité et leur niveau de disponibilité.
Le document « KaliGreen: A distributed Scheduler for Energy Saving », LVAREZ-VALERA HERNN H et al., PROCEDIA COMPUTER SCIENCE, ELSEVIER, AMSTERDAM, vol. 141, 5 novembre 2018 (2018-11-05), pages 223-230, décrit un ordonnanceur distribué pour l'économie d'énergie.
Le document US 2018/0295187 A1 décrit un procédé de surveillance de systèmes de stockage utilisant un dispositif de détection sans fil à faible puissance basé sur le WiFi.

Il n'existe donc pas actuellement de plateforme informatique de gestion offrant à la fois un haut niveau de disponibilité sans avoir recours à la redondance et une grande évolutivité.

### RESUME DE L'INVENTION

La présente invention utilise une approche « service » faisant appel à une architecture de micro-services. Pour cela, l'invention propose une plateforme de services, telle que revendiquée dans la revendication 1, implementée par un ou plusieurs ordinateurs. La plateforme comprend un ou plusieurs micro-services. Chaque micro-service a une structure générique normalisée comprenant :
* un sous-service implémentant une fonction métier ;
* un sous-service de messagerie ;

La plateforme de service comprend en outre un système de communication unifié pour un échange de données et de messages.

Une telle plateforme améliore le niveau de disponibilité d'une plateforme de gestion, tout en offrant un haut niveau de disponibilité sans avoir recours à la 1 redondance et une grande évolutivité. D'autres améliorations, parmi lesquelles les modes de réalisation préférés, qui correspondent aux revendications dépendantes, seront discutées plus bas.

La plateforme de services peut implémenter un système de gestion d'une batterie et de ses équipements auxiliaires ; on parle alors d'une plateforme de services, implémentée par un ou plusieurs ordinateurs, de gestion d'une batterie et de ses équipements auxiliaires.

Selon différents modes de réalisation, toute combinaison d'au moins l'une des caractéristiques suivantes peut être implémentée :
- chaque micro-service comprend en outre une interface utilisateur et/ou machine ;
- chaque micro-service comprend en outre au moins une fonction de gestion du micro-service ;
- ladite au moins une fonction de gestion est sélectionnée parmi une fonction de journalisation du système exécutant le micro-service et/ou du micro-service exécuté ; une fonction de gestion d'alarme(s) émise(s) et/ou reçue(s) par le micro-service ; une fonction de gestion de la configuration du micro-service ; une fonction de sauvegarde et de restauration d'un état courant du micro-service ;
- un service de centralisation des journaux sur lequel sont stockés des messages de journalisation mis en forme et envoyés par la fonction de journalisation.
- la fonction de journalisation ajoute une métadonnée à chaque message de journalisation mise en forme et envoyée par la fonction de journalisation, les métadonnées comprenant - une métadonnée PRIORITY, prenant une valeur sélectionnée parmi les valeurs suivantes : TRACE ; DEBUG ; INFO ; WARN ; ERROR ; CRITICAL ; - une métadonnée TYPE, prenant une valeur sélectionnée parmi les valeurs suivantes : une valeur SYSTEM indiquant un message lié au fonctionnement du micro-service en question ; une valeur OPERATIONNAL indiquant un message lié aux fonctions métier ; - une métadonnée AUDIT, prenant une valeur sélectionnée parmi les valeurs suivantes : une valeur VRAI indiquant que le message doit être traité comme ayant trait à la sécurité ; une valeur FAUX indiquant que le message doit être traité comme n'ayant pas trait à la sécurité ;
- le système de communication unifié comprend l'utilisation, de sockets pour une communication inter-micro-service en local ou via un réseau TCP/IP, ce choix étant configuré par la fonction de gestion de la configuration du micro-service ;
- les sockets pour la communication inter- micro-service utilisent un mandataire sans état qui met en relation un micro-service publiant un ou des messages concernant un ou plusieurs sujets de la messagerie avec un ou plusieurs micro-services ayant souscrit auxdits un ou plusieurs sujets de la messagerie ;
- le sous-service de messagerie comprend :
   * une fonction de souscription à un ou plusieurs sujets de la messagerie ;
   * une fonction de publication dans un sujet de la messagerie ;
   * une fonction d'envoi de requête via la messagerie ;
   * une fonction de réponse à une requête reçue via la messagerie.
- la fonction de souscription comprend souscrire à un ou plusieurs sujets du sous-service de messagerie, mettre en forme et écrire les données contenues dans les messages associés audit un ou plusieurs sujets souscrits dans une base de données locale adaptée pour le stockage de données horodatées ;
- le système de communication unifié est asynchrone, non-bloquant, et point à multipoints ou multipoints à point ;
- un ou plusieurs services supplémentaires sont fournis par le système d'exploitation d'un ou plusieurs ordinateurs exécutant un ou plusieurs micro-services ;
- le un ou plusieurs services supplémentaires sont sélectionnés parmi un service d'initialisation du système d'exploitation ; un service de démarrage des micro-services ; un service central de stockage et de gestion des messages de journalisation dans une base de données ;
- un daemon (un « démon » en français) exécuté par un ordinateur, le daemon réalisant au moins une des tâches suivantes : déterminer si le un ou plusieurs micro-services fonctionne correctement, et le redémarre le cas échéant ; surveiller le bon fonctionnement du système d'exploitation de l'ordinateur exécutant le micro-service et le redémarrer le cas échéant ;
- chaque micro-service est exécuté comme un unique processus et chaque sous-service du micro-service est exécuté comme un thread ; un thread (terme anglais pour fil d'exécution, terme et définition normalisés par ISO/CEI 2382-7:2000) est similaire à un processus à la différence qu'un processus possède sa propre mémoire qu'il ne partage pas avec les autres processus tandis que les threads d'un même processus se partagent sa mémoire.

Il est également proposé une utilisation de la plateforme de services selon l'invention pour implémenter un système de gestion d'une batterie et de ses équipements auxiliaires, la batterie étant formée d'une ou plusieurs branches montées en parallèle, chaque branche comprenant un ou plusieurs modules montés en série, chaque module comprenant un ou plusieurs éléments électrochimiques.

Cette utilisation peut en outre comprendre au moins un équipement auxiliaire qui est sélectionné parmi un système d'extinction d'incendie ; un système de climatisation ; un système de surveillance des accès physiques ; un système de mesure de la puissance électrique.

Il est également proposé un ensemble comprenant :
- une ou plusieurs branches de batterie montées en parallèle formant une batterie, chaque branche de la batterie comprenant un ou plusieurs modules montés en série, chaque module comprenant un ou plusieurs éléments électrochimiques ;
- un ou plusieurs ordinateurs ;
- une plateforme de services selon l'invention implémentée par lesdits un ou plusieurs ordinateurs, dans laquelle les micro-services implémentent des fonctions métiers de gestion de la batterie et de ses équipements auxiliaires ; et
- un ou plusieurs organes de contrôle-commande des branches, qui exécutent les ordres de connexion/déconnexion et qui fournissent des mesures des paramètres des branches, des modules et des éléments électrochimiques.

Il est également proposé un ensemble comprenant :
- une ou plusieurs branches de batterie montées en parallèle formant une batterie, chaque branche de la batterie comprenant un ou plusieurs modules montés en série, chaque module comprenant un ou plusieurs éléments électrochimiques ;
- au moins un équipement auxiliaire de la batterie;
- un ou plusieurs ordinateurs ;
- une plateforme de services selon l'invention implémentée par lesdits un ou plusieurs ordinateurs ; et
- un ou plusieurs organes de contrôle-commande des branches, qui exécutent les ordres de connexion/déconnexion et qui fournissent des mesures des paramètres des branches, des modules et des éléments électrochimiques.

Selon différents modes de réalisation, toute combinaison d'au moins l'une des caractéristiques suivantes peut être implémentée pour l'ensemble :
- une ou plusieurs des fonctions métier sont sélectionnées parmi la détermination de la connexion / déconnexion au réseau électrique d'au moins une branche de la batterie ; le calcul des consignes de courant applicables à la charge et à la décharge de la batterie ; le calcul du niveau de charge de la batterie ; le calcul du niveau de vie de la batterie ;
- deux ou plus ensembles de branches de batterie montées en parallèle formant respectivement deux ou plus batteries et dans lequel la plateforme de service comprend en outre un micro-service implémentant une fonction métier d'agrégation des données d'une ou plusieurs des autres fonctions métier.
- la plateforme de service comprend en outre un ou plusieurs micro-services pouvant envoyer des données échangées sur le système de communication unifié en direction d'un système de stockage distant pour y être stockées, le système de stockage distant étant en outre couplé avec un système d'apprentissage automatique pouvant effectuer son apprentissage sur les données stockées ;
- la plateforme de service comprend en outre un micro-service de mise à jour des autres micro-services ;
- la plateforme de service comprend en outre un micro-service de mise à jour des logiciels des organes de contrôle-commande des branches ;
- au moins un équipement auxiliaire est sélectionné parmi :
   - un système d'extinction d'incendie ;
   - un système de climatisation ;
   - un système de surveillance des accès physiques ;
   - un système de mesure de la puissance électrique.

### BREVE DESCRIPTION DES FIGURES

Des modes de réalisation de l'invention vont être maintenant décrits au moyen d'exemples non-limitatifs de l'invention, et en référence aux figures, où :
[Fig. 1] est un exemple d'architecture de communication entre les micro-services ;
[Fig. 2] est un exemple de modèle type de micro-service ;
[Fig. 3] illustre une comparaison entre une gestion monolithique des services et une gestion via micro-services ;
[Fig. 4] est un exemple de messagerie comprenant des publieurs et des souscripteurs abonnés à des sujets de la messagerie
[Fig. 5] est un exemple d'ordinateur pouvant exécuter un micro-service ;
[Fig. 6] est un exemple de configuration d'une batterie pouvant être gérée en utilisant la plateforme de services ; et
[Fig. 7] illustre la diversité des équipements et des services proposés par une plateforme de service.

### DESCRIPTION DE MODES DE REALISATION DE L'INVENTION

La présente invention concerne une plateforme de services implémentée par un ou plusieurs ordinateurs. La plateforme de services propose une infrastructure informatique de gestion d'un système industriel. La plateforme de service gère un ou plus services sous la forme de micro-services. Un service de la plateforme est sous la forme d'un micro-service. Si la plateforme gère plusieurs services, il peut y avoir autant de micro-services qu'il y a de services. Les micro-services peuvent être exécutés sur un ou plusieurs ordinateurs, c'est-à-dire qu'une unité de calcul peut exécuter un ou plusieurs micro-services.

Le terme micro-service fait référence à une architecture logicielle qui structure une application comme un ensemble de services réalisant chacun une fonction unitaire simple et faiblement couplés entre eux. Les micro-services doivent être aussi indépendants que possible les uns des autres, et ils doivent communiquer entre eux indépendamment les uns avec les autres en utilisant des API indépendantes du langage de programmation.

Chaque micro-service possède une structure générique normalisée. Une structure générique normalisée est décrite grâce à un modèle type (appelé en anglais "template") de micro-service. Le modèle type de micro-service normalise la construction et le fonctionnement du micro-service. Si la plateforme comprend plusieurs micro-services, chaque micro-service sera conforme à la structure générique normalisée.

La structure générique normalisée qui s'applique à chaque micro-service comprend a minima les deux sous-services suivants. Le premier sous-service est un sous-service implémentant une fonction métier. La fonction métier définit un rôle spécifique qui va être rendu par le micro-service dans le cadre de son utilisation dans le système industriel géré par la plateforme de gestion. La fonction métier peut être également nommée fonctionnalité métier. La fonction métier ou fonctionnalité métier peut comprendre par exemple une application métier, un processus métier, ou encore un service métier.

Le deuxième sous-service est un sous-service de messagerie qui permet au micro-service de communiquer avec un élément externe à lui-même, par exemple un autre micro-service. Le sous-service de messagerie définit une APl (acronyme de l'anglais Application Programming Interface) permettant au micro-service d'accéder à une messagerie commune aux autres micro-services et donc de communiquer avec eux.

La plateforme de service comprend un système d'échange de données et de messages qui est un dispositif de transmission de données et de messages partagé entre plusieurs composants de la plateforme, par exemple les composants sont des micro-services. Ce mécanisme est appelé par la suite « système de communication unifié ».

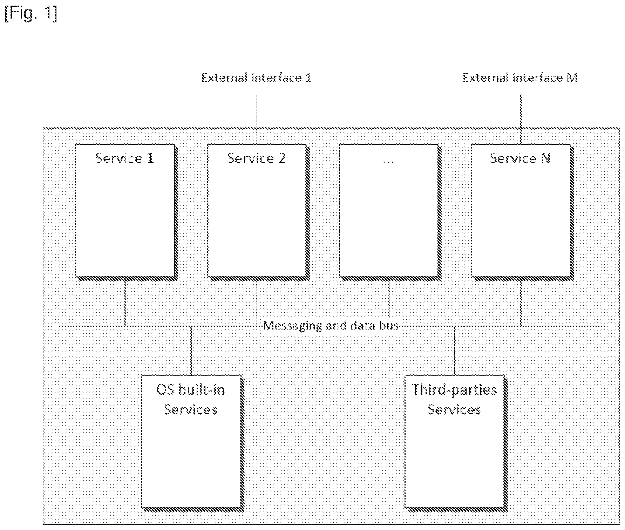

La figure 1 illustre un exemple de plateforme selon l'invention dans laquelle N+2 services sont représentés et communiquent entre eux via le système de communication unifié. L'ensemble des services représentés sur la figure 1 peuvent être exécutés par un seul ordinateur ou encore par plusieurs ordinateurs (et au maximum N+2 ordinateurs).

La plateforme selon l'invention permet un contrôle industriel qui s'interface avec des sous-systèmes diversifiés ayant des interfaces variées (liaison série, Ethernet, CAN, et avec différents protocoles) et leur logique métier. La plateforme de service selon l'invention fournit une haute disponibilité. En effet, l'architecture proposée permet d'atteindre de hauts niveaux de disponibilité grâce à la grande indépendance des micro-services entre eux qui est notamment assurée par le fait que chaque micro-service implémente une fonction métier simple et qu'il peut communiquer de manière non-bloquante avec un ou plusieurs autres micro-services via le système de communication unifié. Ainsi lorsqu'un des micro-services ne fonctionne plus, il n'entraine pas la totalité de la plateforme avec lui qui continue à fonctionner. La plateforme de service selon l'invention fournit également une grande évolutivité et extensibilité. En effet, l'ajout d'un nouveau micro-service est possible sans modification et sans impact sur les micro-services déjà existants ; la seule condition est que les ressources matérielles permettant son exécution soient disponibles. De plus, les micro-services pouvant être sur des machines hôtes différentes, la répartition de la charge est facilitée et peut être reconfigurée si besoin est.

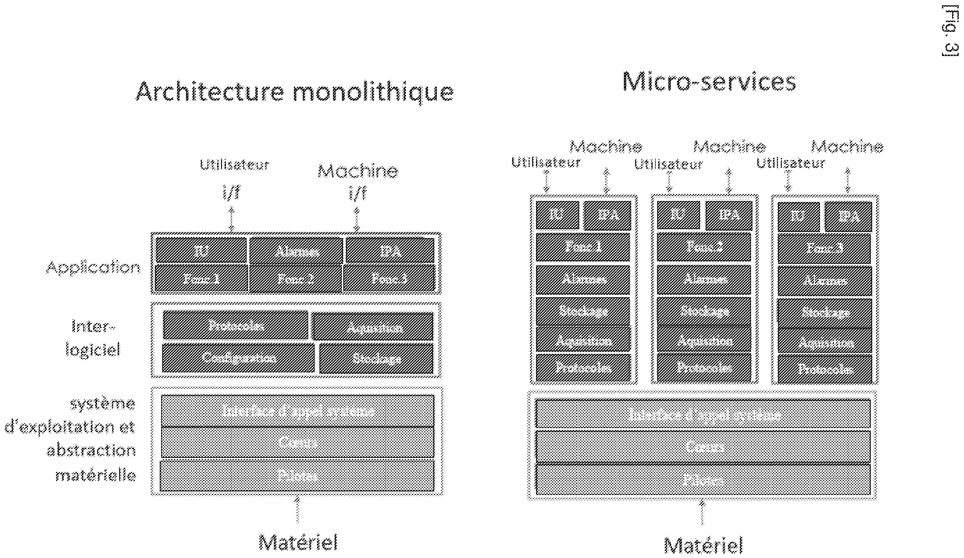

La figure 3 illustre les différences conceptuelles entre une architecture monolithique utilisée dans des plateformes connues de gestion des services d'un système industriel, et une plateforme basée sur des micro-services selon l'invention. Notamment, l'indépendance de chaque micro-service pour son exécution améliore la robustesse de la plateforme en cas de défaillance d'un micro-service, mais améliore également le déploiement de la solution puisque chaque micro-service peut être individuellement adapté à un nouveau contexte, par exemple un nouvel équipement plus récent.

Dans des exemples, chaque micro-service peut comprendre une interface utilisateur et/ou une interface machine. Une interface utilisateur permet à un utilisateur d'interagir avec le micro-service, par exemple pour le contrôler. Une interface machine permet à un micro-service de dialoguer avec un équipement ou une machine extérieure à la plateforme. Sur la figure 1, le service 2 et le service N peuvent échanger des informations et/ou être contrôlés par un équipement ou une machine extérieure à la plateforme) via une interface machine ; on parle alors d'API. L'interface utilisateur et/ou l'interface machine peuvent être implémentées comme un sous-service à part.

Dans des exemples, chaque micro-service peut comprendre une ou plusieurs fonctions de gestion du micro-service. Une fonction de gestion permet de contrôler l'exécution du micro-service.

Dans des exemples, la ou les fonctions de gestion du micro-service peuvent être une fonction de journalisation. La journalisation peut concerner le système exécutant le micro-service et/ou le micro-service qui comporte la fonction de journalisation, ou encore un autre micro-service. La journalisation désigne l'enregistrement séquentiel, dans un fichier ou une base de données de tous les événements affectant le système exécutant le micro-service et/ou le micro-service qui compte la fonction de journalisation et/ou d'un autre micro-service. La journalisation peut être horodatée.

Dans des exemples, la fonction de journalisation peut comprendre un service de centralisation des journaux pour stocker les messages de journalisation. Le service de centralisation des journaux peut être compris dans la fonction de journalisation (c'est-à-dire interne à la fonction de journalisation), ou bien il peut être autonome à la fonction de journalisation (c'est-à-dire externe à la fonction de journalisation). Dans ce dernier cas, le service de centralisation des journaux peut être un micro-service de la plateforme de services. Le service de centralisation des journaux peut être utilisé par une fonction de journalisation d'un micro-service et/ou par plusieurs fonctions de journalisations de plusieurs micro-services.

Dans des exemples, la mise en forme des messages de journalisation réalisée par la fonction de journalisation peut comprendre l'ajout d'une métadonnée à chaque message de journalisation. Les métadonnées permettent d'améliorer les traitements des données de journalisations.

Dans des exemples, une métadonnée PRIORITY peut être introduite dans les messages par la fonction de journalisation. Cette métadonnée informe du niveau de criticité du message selon la valeur associée à la métadonnée PRIORITY. Dans un ordre croissant de criticité, la valeur associée peut être sélectionnée parmi les valeurs suivantes :
- TRACE : le contenu du message ne comprend pas d'événement courant particulier ;
- DEBUG : le contenu du message peut comprendre des informations pertinentes pour un futur événement courant ;
- INFO : le contenu du message comprend des informations pertinentes pour un évènement courant ;
- WARN : le contenu du message comprend des informations pertinentes pour un événement courant problématique ;
- ERROR : le contenu du message comprend des informations pour un évènement courant grave ;
- CRITICAL : le contenu du message comprend des informations pour un événement courant critique.

Dans des exemples, une métadonnée TYPE peut être introduite dans les messages par la fonction de journalisation. Cette métadonnée est accompagnée soit d'une valeur SYSTEM qui indique que le message est lié au fonctionnement du micro-service qui l'a émis, soit d'une valeur OPERATIONNAL indiquant un message lié à et/ou aux fonctions métier d'un micro-service, par exemple celui qui a émis le message.

Dans des exemples, une métadonnée AUDIT peut être introduite dans les messages par la fonction de journalisation. Cette métadonnée AUDIT est accompagnée d'une valeur VRAI indiquant que le message doit être traité comme ayant trait à la sécurité, ou bien d'une valeur FAUX indiquant que le message doit être traité comme n'ayant pas trait à la sécurité.

Les précédents exemples de métadonnées introduites dans les messages par la fonction de journalisation peuvent être combinés entre eux.

Dans des exemples, l'une des fonctions de gestion du micro-service peut être une fonction de gestion d'alarme(s) émise(s) et/ou reçue(s) par le micro-service. Une alarme permet au micro-service de signaler un niveau de criticité d'un événement qui peut être un événement présent (c'est à dire un événement qui est en train de se produire, ou bien encore un événement passé (c'est-à-dire un événement qui s'est terminé) ou bien encore un événement futur (c'est-à-dire un événement qui peut se produire, par exemple il est prédit). De manière générale, on utilise le terme événement courant pour désigner ces différents types d'évènement.

Dans des exemples, l'une des fonctions de gestion du micro-service peut être une fonction de gestion de la configuration du micro-service. La configuration du micro-service comprend l'ensemble des paramètres définis qui déterminent la façon dont le micro-service démarre et/ou est exécuté et/ou est stoppé.

Dans des exemples, l'une des fonctions de gestion du micro-service peut être une fonction de sauvegarde et de restauration d'un état courant du micro-service. L'état courant du micro-service contient les structures de données et leur valeurs courantes permettant au micro-service de redémarrer avec ces valeurs d'initialisation plutôt qu'avec des valeurs par défaut (par exemple zéro)

La plateforme de services comprend un système de communication unifié permettant l'échange de données et de messages.

Dans des exemples, le système de communication unifié comprend l'utilisation de sockets. Les sockets d'un micro-service peuvent permettre une communication inter-micro-service en local et une communication inter-micro-service via un réseau TCP/IP. On comprend que tout protocole réseau permettant une communication inter-micro-service peut être utilisé, et n'est pas limité à TCP/IP. Les sockets offrent un modèle permettant la communication inter processus (IPC, acronyme de l'anglais Inter Process Communication) afin de permettre à divers processus de communiquer aussi bien sur une même machine qu'à travers un réseau TCP/IP.

Le choix d'une communication en local (par exemple lorsque plusieurs micro-services sont exécutés sur un même ordinateur) ou via un réseau TCP/IP (par exemple lorsque plusieurs micro-services sont exécutés sur plusieurs ordinateurs) est configuré par la fonction de gestion de la configuration du micro-service.

Dans un exemple, les sockets pour la communication inter-micro-service utilisent un mandataire sans état qui met en relation un micro-service publiant un ou des messages concernant un ou plusieurs sujets de la messagerie avec un ou plusieurs micro-services ayant souscrit auxdits un ou plusieurs sujets de la messagerie. Un mandataire sans état (en anglais stateless proxy) est un mandataire qui a pour unique fonction de transmettre les messages qu'il reçoit au(x) destinataire(s) des messages. Le mandataire ne stocke aucune information concernant le type d'information et/ou de transaction qu'il transmet et/ou exécute. Un tel mandataire présente l'avantage d'une extrême simplicité dans la fourniture d'un service multi-points à multi-points, c'est-à-dire d'un service dans lequel plusieurs micro-services qui publient peuvent communiquer avec plusieurs micro-services qui souscrivent aux publications, tout en limitant le nombre de sockets et donc la consommation de ressources de calcul et de mémoire sur le ou les ordinateur(s) qui exécutent les micro-services. De plus il facilite grandement l'ajout de nouveaux intervenants dans le système de messagerie.

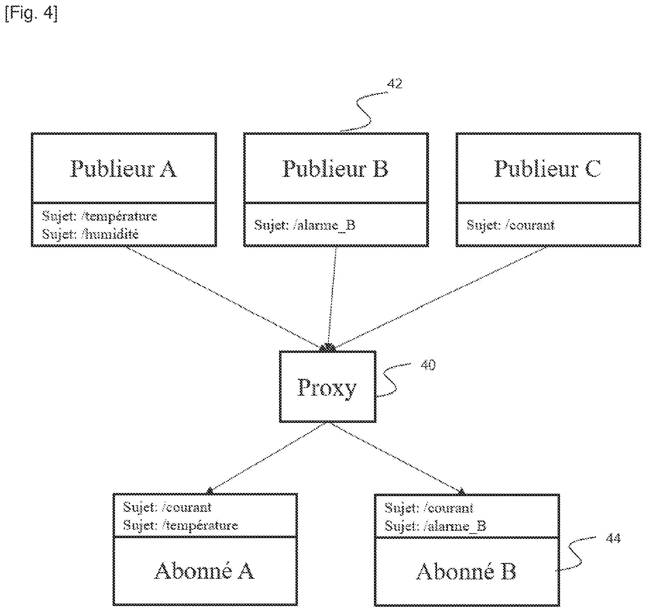

La figure 4 est un exemple d'implémentation d'une communication inter-micro-service. Dans cet exemple, une API de messagerie ZeroMQ^{©} est utilisée comme épine dorsale pour les communications entre les micro-services. Cette API est de niveau middleware (intergiciel en français) basée sur des sockets IPC (Inter Process Communication). On comprend que toute autre API de messagerie permettant de mettre en communication des micro-services peut être utilisée, offrant de préférence une fonction de souscription à un ou plusieurs sujets de la messagerie, par exemple l'API de messagerie nanomsg^{©}. ZeroMQ^{©} est une bibliothèque de messagerie asynchrone haute performance, destinée à être utilisée dans des applications distribuées ou concurrentes. L'API de la bibliothèque est conçue pour ressembler à celle des sockets BSD. La version de ZeroMQ^{©} utilisée dans cet exemple est la version 4.3.2 du le 8 juillet 2019. On comprendra que les implémentations de la version 4 ou supérieure peuvent être utilisées. Le proxy ZeroMQ^{©} est un intermédiaire sans état qui met en relation (c'est-à-dire qu'il relie) des micro-services publieurs (en anglais publishers) avec des micro-services abonnés (en anglais subscribers). Le proxy ZeroMQ^{©} n'est pas un agent de message (en anglais broker), c'est-à-dire qu'il n'effectue aucune conversion des messages. Le proxy ZeroMQ^{©} est un mandataire sans état, c'est-à-dire qu'il n'a aucune intelligence et qu'il n'effectue aucun traitement sur les messages ; il se contente de les recevoir et de les transmettre. On comprend qu'un mandataire sans état peut accepter de nouveaux micro-services facilement, dynamiquement et sans interruption des communications sur le système de communication unifié.

Toujours en référence à la figure 4, le mandataire sans état 40 reçoit sur une première interface (notée XSU8) l'ensemble des micro-services 42 qui publient, et sur une deuxième interface (notée XPUB) l'ensemble des micro-services (44) qui sont abonnés aux messages d'un ou plusieurs ou de tous les micro-services. Le mandataire sans état 40 fait donc le lien entre les publieurs d'un côté et les abonnés de l'autre connectés aux deux interfaces. Les données envoyées par les micro-services sont sérialisées en entrée (au niveau de l'interface XSUB) et désérialisées en sortie (au niveau de l'interface XPUB) en utilisant par exemple le protocole Protobuff (Protocol Buffer Format) qui est un format d'échange binaire pour sérialiser des données structurées.

Dans des exemples, le système de communication unifié peut être asynchrone, comme par exemple avec ZeroMQ^{©}. Le système de communication unifié peut être non-bloquant, c'est-à-dire qu'un message ne peut pas empêcher d'autres messages d'être transmis. Plus généralement, le système de communication unifié non-bloquant permet au micro-service de réaliser d'autres tâches même si un message envoyé est en attente, ou encore une réponse attendue à un message n'est pas parvenue au micro-service. Le système de communication unifié peut être également point à multipoint ou bien multipoint à point ; un micro-service peut donc envoyer des messages à plusieurs micro-services, et inversement plusieurs micro-services peuvent envoyer des messages à un micro-service.

Le sous-service de messagerie est maintenant discuté. Dans des exemples, le sous-service de messagerie peut comprendre une ou plusieurs des fonctions discutées dans les exemples qui suivent, et dans un exemple il les comprend toutes. Le sous-service de messagerie peut comprendre une fonction de souscription à un ou plusieurs sujets de la messagerie. Un sujet de messagerie peut être déterminé par, mais n'est pas limité à, un identifiant de sujet comme par exemple un nom de mesure venant d'un micro-service interfacé avec un ou des capteurs externes comme par exemple 'Température' ou 'Courant'. Un identifiant de sujet peut également être une catégorie de message utile au fonctionnement du système lui-même comme par exemple 'Alarme'.

Dans un exemple, la fonction de souscription comprend la souscription à un ou plusieurs sujets de la messagerie, la mise en forme et l'écriture des données contenues dans les messages associés audit un ou plusieurs sujets de messagerie souscrits dans une base de données adaptée pour le stockage de données horodatées. La base de données peut être une base de données locale, c'est-à-dire que chaque micro-service stocke les données sur une base de données qui est localisée sur l'ordinateur qui exécute le micro-service. La base de données peut être une base de données distante, par exemple localisée sur un ordinateur différent de celui qui exécute le micro-service.

Le sous-service de messagerie peut comprendre une fonction de publication dans un sujet de la messagerie. Cette fonction de publication permet au micro-service d'envoyer des messages pour un sujet de messagerie.

Le sous-service de messagerie peut comprendre une fonction d'envoi de requête via la messagerie. Une requête est un message qui attend une réponse d'un ou plusieurs autres micro-services. De façon générale, une requête est un langage informatique utilisé pour accéder à des données, par exemple des données d'une base de données ou d'autres systèmes d'information. Dans un exemple, le sous-service de messagerie comprend également une fonction de réponse à une requête reçue via la messagerie. Cette fonction permet donc auxdits micro-services de répondre à la requête émise par l'un des micro-services.

Dans des exemples, l'ensemble des communications interservices, c'est-à-dire l'envoi de messages entre les différents sous-services des micro-services de la plateforme, passent par le sous-service de messagerie. Dans un exemple, une exception peut concerner le cas où la plateforme de services comprend une interface permettant d'interagir avec un utilisateur. L'interface est fournie par un micro-service qui utilise uniquement des données locales pour de meilleures performances, notamment pour offrir une meilleure réactivité à l'utilisateur. Dans un autre exemple, une interface web locale est fournie à un utilisateur par un micro-service, et l'interface web vient lire les informations dans une base de données locale de l'ordinateur qui exécute ce micro-service, sans passer par le système de messagerie.

Un micro-service est un élément logiciel de la plateforme qui comprend un sous-service implémentant une fonction métier et un sous-service de messagerie. Les sous-services implémentant la fonction métier réalisent les services d'un système industriel, et le sous-service de messagerie offre aux sous-services implémentant une fonction métier des moyens de communiquer entre eux, en s'appuyant notamment sur le système de communication unifié. On rappelle qu'un service est une fonctionnalité ou une partie de fonctionnalité mise à disposition par un composant logiciel pour assurer une tâche particulière. Afin de limiter le nombre de micro-services gérés par la plateforme, et dans des exemples, un ou plusieurs services supplémentaires peuvent être fournis par le système d'exploitation d'un ou plusieurs ordinateurs exécutant un ou plusieurs micro-services. En d'autres termes, des services supplémentaires qui sont offerts par les ordinateurs exécutant les micro-services peuvent être exploités par la plateforme selon l'invention. Par exemple, l'utilitaire open source "monit" (version 5 ou ultérieure), qui rentre dans la catégorie des daemons, peut être en charge de surveiller le micro-service et l'ordinateur qui exécute le micro-service. Cet utilitaire peut mesurer les ressources de l'ordinateur (processeur, mémoire, disques, réseau...) utilisées par le micro-service, être un chien de garde (watchdog en anglais) qui détermine les processus qui sont gelés.

Dans des exemples, les services supplémentaires peuvent être sélectionnés parmi les services suivants. On comprend que ces exemples ne sont pas limitatifs et que tout service pouvant être fourni par un système d'exploitation peut être un service supplémentaire. Ainsi, un service supplémentaire peut être un service d'initialisation du système d'exploitation qui commande l'exécution de plusieurs programmes au démarrage du système d'exploitation. Par exemple, le programme init dans les systèmes UNIX/LINUX a un rôle de processus principal du démarrage qui consiste à commander l'exécution de plusieurs programmes. Un service supplémentaire peut être un service de démarrage des micro-services ; par exemple un service qui séquence le démarrage de tous les micro-services selon un certain ordre, et qui vérifie leur bon démarrage. Un service supplémentaire peut être un service de stockage et de gestion centrale des messages de journalisation dans une base de données.

Également dans le but de limiter le nombre de micro-service gérés par la plateforme, et dans des exemples, un ou plusieurs daemons exécutés par un ordinateur peuvent être utilisés. Un daemon est un type de programme informatique, un processus ou un ensemble de processus qui s'exécute en arrière-plan plutôt que sous le contrôle direct d'un utilisateur. Les daemons sont souvent démarrés lors du chargement du système d'exploitation, et servent en général à répondre à des requêtes du réseau, à l'activité du matériel ou à d'autres programmes en exécutant certaines tâches. Un daemon peut ainsi réaliser au moins une des tâches suivantes, (i) Le daemon détermine si un ou plusieurs micro-services fonctionnent correctement, (ii) Le daemon peut redémarrer un micro-service si celui-ci ne fonctionne pas correctement, (iii) Le daemon peut surveiller le bon fonctionnement du système d'exploitation de l'ordinateur exécutant le micro-service, (iv) Le daemon peut redémarrer le système d'exploitation si celui-ci ne fonctionne pas correctement.

Les micro-services sont des programmes exécutés par un ordinateur. Le terme ordinateur désigne un système de traitement de l'information programmable qui fonctionne par la lecture d'un ensemble d'instructions, organisées en programmes, qui lui font exécuter des opérations logiques et arithmétiques. Un ordinateur comprend au moins une unité de calcul (par exemple une CPU) et une mémoire, en communication avec l'unité de calcul, qui stocke le programme d'ordinateur.

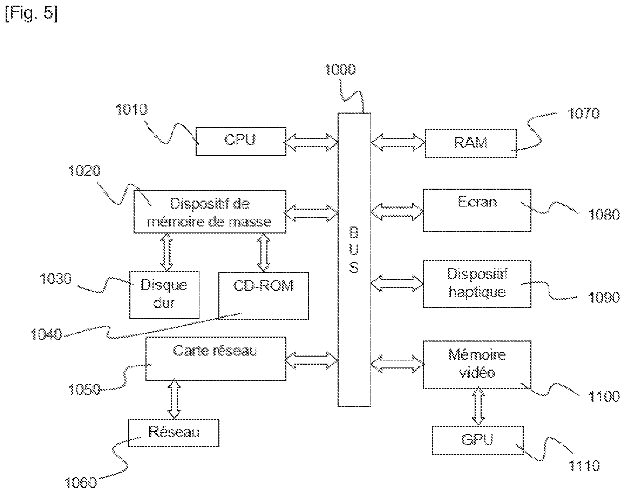

La figure 5 montre un exemple d'un ordinateur permettant d'exécuter un micro-service selon l'invention, et pouvant être compris dans une plateforme selon l'invention. L'ordinateur de l'exemple comprend une unité de traitement centrale (CPU) 1010 connectée à un bus de communication interne 1000, une mémoire vive (RAM) 1070 également connectée au bus. La mémoire vive est donc en communication avec l'unité de traitement centrale. L'ordinateur peut être doté d'une unité de traitement graphique (GPU) 1110 qui peut être associée à une mémoire vidéo à accès sélectif 1100 connectée au bus. La RAM vidéo 1100 est également connue dans la technique sous le nom de mémoire tampon d'images (framebuffer en anglais). L'ordinateur peut comprendre un contrôleur de dispositif de mémoire de masse 1020 ; le contrôleur gère les accès à un dispositif de mémoire de masse, tel qu'un disque dur 1030. Les dispositifs de mémoire de masse sont adaptés à la réalisation concrète d'instructions de programmes informatiques et incluent toutes les formes de mémoire non volatile, y compris à titre d'exemple des dispositifs de mémoire à semi-conducteurs, tels que EPROM, EEPROM et dispositifs de mémoire flash ; des disques magnétiques tels que des disques durs internes et des disques amovibles ; disques magnéto-optiques ; et disques CD-ROM 1040. Tout ce qui précède peut-être complété ou incorporé dans des ASIC spécialement conçus (circuits intégrés spécifiques à une application). L'ordinateur peut comprendre une carte réseau 1050 qui gère les accès à un réseau 1060. L'ordinateur client peut également inclure un dispositif haptique 1090 tel qu'un dispositif de commande de curseur, un clavier ou similaire.

L'ordinateur peut stocker sur sa mémoire vive, ou bien sur une mémoire de masse un ou plusieurs programmes d'ordinateur. Le programme d'ordinateur peut comprendre des instructions exécutables par l'unité de calcul de l'ordinateur, les instructions comprenant des moyens pour amener l'ordinateur ci-dessus à implémenter tout ou partie de la plateforme selon l'invention. Le programme peut être enregistrable sur n'importe quel support de stockage de données, y compris la mémoire vive et/ou la mémoire de masse du système. Le programme peut par exemple être mis en œuvre dans des circuits électroniques numériques, ou dans du matériel informatique, des micrologiciels, des logiciels ou des combinaisons de ceux-ci. Le programme peut être mis en œuvre sous la forme d'un appareil, par exemple un produit incorporé de manière tangible dans un dispositif de stockage lisible par machine pour une exécution par un processeur programmable. Le processeur (l'unité de traitement centrale) peut ainsi être programmé et couplé pour recevoir des données et des instructions provenant d'un système de stockage de données, d'au moins un dispositif d'entrée et d'au moins un dispositif de sortie et pour transmettre des données et des instructions à un tel système. Le programme d'application peut être implémenté dans un langage de programmation procédural ou orienté objet de haut niveau, ou en langage assembleur ou machine si nécessaire. Dans tous les cas, le langage peut être un langage compilé ou interprété. Le programme peut être un programme d'installation complet ou un programme de mise à jour. L'application du programme sur le système entraîne dans tous les cas des instructions pour l'implémentation de la plateforme.

La plateforme peut être distribuée, c'est-à-dire qu'elle est implémentée (exécutée) par plusieurs ordinateurs, et non par un seul. On comprend alors que le programme de la plateforme peut alors être constitué de plusieurs sous-programmes exécutés par plusieurs machines, formant ainsi la plateforme de services selon l'invention. Lorsque la plateforme est implémentée sur plusieurs ordinateurs, chaque ordinateur exécute au moins un micro-service. La figure 1 précédemment discutée illustre un exemple de plateforme pouvant être exécutée par plusieurs ordinateurs.

Dans des exemples, chaque micro-service exécuté par un ordinateur peut l'être comme un unique processus. Chaque sous-service du micro-service peut être exécuté comme un fil d'exécution. Un fil d'exécution (terme français pour « thread », terme et définition normalisés par ISO/CEI 2382-7:2000) est similaire à un processus à la différence qu'un processus possède sa propre mémoire qu'il ne partage pas avec les autres processus tandis que les fils d'exécution d'un même processus se partagent sa mémoire. Le « multi-usage de fils d'exécution » des sous-services d'un micro-service participe à la performance du micro-service car les fils d'exécution sont exécutés de manière concurrente, en parallèle.

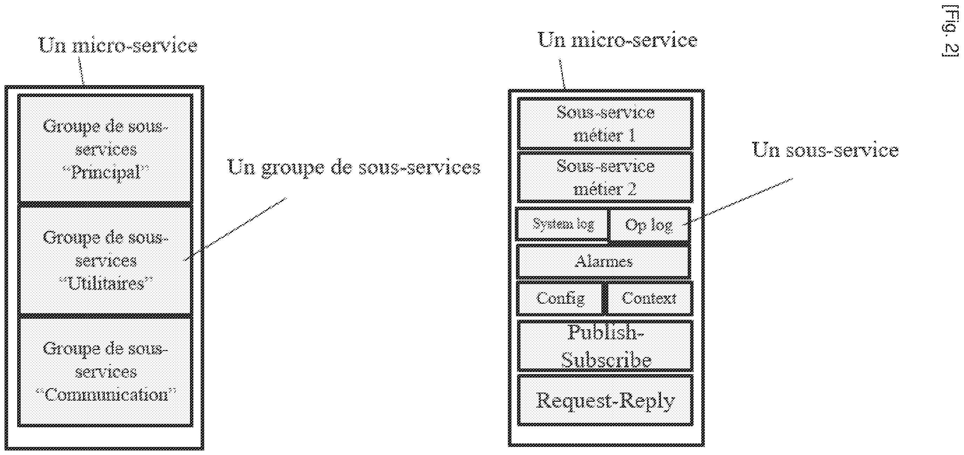

La figure 2 illustre un exemple de modèle type de micro-service selon l'invention. Sur la partie gauche de la figure 2, un modèle d'un micro-service est représenté. Le modèle comprend trois groupes de sous-services. Un premier groupe représente les sous-services principaux qui sont la fonctionnalité principale (c'est-à-dire attendue) du micro-service. Un deuxième groupe fournit des sous-services utilitaires pour la gestion du micro-service. Enfin, un troisième groupe représente le sous-service de Communication pour permettre au micro-service de communiquer avec d'autres micro-services, et donc d'être intégré à la plateforme.

Toujours en référence à la figure 2, et maintenant sur la partie de droite de la figure, un exemple de structure générique normalisée est représenté. La structure normalisée du micro-service (aussi appelée micro-service template en anglais) est définie par le modèle. Tous les micro-services sont basés sur cette structure normalisée. Le groupe le plus haut comprend un ou plusieurs sous-services qui représentent la fonction métier (métier 1 et métier 2 sur la figure). Le groupe du milieu comprend cinq fonctions de gestion du micro-service. Parmi ces fonctions, il y a une fonction de journalisation des événements liés au fonctionnement du micro-service (nommée System logs), une fonction de journalisation des événements concernant la fonction métier (nommée Operational logs ou Op log), une fonction de gestion des alarmes émises et reçues par le micro-service (nommée Alarmes), une fonction de gestion de configuration du micro-service (nommée Config), et une fonction de sauvegarde et de restauration de l'état courant du micro-service (nommée Context). Le groupe du bas montre les fonctions que comprend le sous-service de messagerie. Le sous-service de messagerie comprend une fonction de publication dans un ou plusieurs sujets de la messagerie (nommée Publish-subscribe), une fonction d'envoi de requête via la messagerie (nommée Request-Reply). Il peut comprendre de plus (non représenté sur la figure 2) une fonction de souscription à un ou plusieurs sujets de la messagerie, une fonction de réponse à une requête reçue via la messagerie. On comprend que les messages envoyés/reçus comprenant une métadonnée TYPE ou encore AUDIT seront notamment traités par les fonctions de journalisation.

Un exemple d'implémentation du micro-service est discuté. L'implémentation de la structure générique normalisée peut être réalisée en langage de programmation orientée objet, par exemple en C++. La fonction métier peut être implémentée par un sous-programme d'ordinateur (nommé Main Program sur la figure) qui, lorsqu'il est exécuté par l'ordinateur, réalise la fonction métier. Les cinq fonctions de gestion du micro-service peuvent être implémentées par trois sous-programmes d'ordinateur. Le premier sous-programme (nommé Syslog clients API) implémente les deux fonctions de journalisation « System logs » et « Operational logs ». Le deuxième sous-programme (nommé Alarm lib) implémente la fonction « Alarm Management ». Un troisième sous-programme (nommé « Protected directory in OS filesystem) peut implémenter les fonctions « Config Handler » et « Context handler ». La fonction du troisième sous-programme peut être fournie par le système d'exploitation de l'ordinateur exécutant le micro-service. On comprend donc que des sous-services d'un micro-service peuvent être ceux proposés par le système d'exploitation de l'ordinateur exécutant le micro-service. Le service de gestion de système de fichiers du système d'exploitation peut stocker et gérer dans une base de données les messages d'alarmes envoyés/reçus par le micro-service ainsi que le/les états courants du micro-service. Enfin, les fonctions du sous-service de messagerie peuvent être implémentées à l'aide de l'API ZeroMQ^{©} discutées en référence avec la figure 4.

Le modèle type de micro-service selon l'invention offre donc un accès à une messagerie normalisée commune à tous les micro-services de la plateforme via un système de communication unifié qui peut utiliser des sockets pour la communication inter-processus, soit en local au sein du même système d'exploitation d'un ordinateur, soit via un réseau et un protocole réseau (par exemple TCP/IP), ou encore une combinaison des deux. La messagerie commune peut utiliser un schéma de communication asynchrone « Publication-Abonnement ». Chaque micro-service peut émettre des données en publiant dans la messagerie commune, sans avoir besoin de savoir si la donnée sera consommée ou pas. Chaque micro-service peut recevoir des données en s'abonnant à une donnée publiée par un autre micro-service, sans que le publieur n'ait besoin d'être informé. La communication peut donc être asynchrone, non-bloquante, point-à-multipoint et multipoint-à-point.

La plateforme de services selon l'invention est apte à gérer des services d'un système industriel, Parmi des exemples d'utilisation de la plateforme, cette dernière implémente un système de gestion d'une batterie et de ses équipements auxiliaires. Une batterie est un terme générique désignant un ensemble d'accumulateurs électriques, appelés éléments, reliés entre eux de façon à créer un générateur électrique de tension, de puissance et de capacité désirée. Une batterie convertit l'énergie électrique accumulée pendant la phase de charge en énergie chimique. L'énergie chimique est constituée par des composés électro-chimiquement actifs disposés dans l'élément. L'énergie électrique est restituée par conversion de l'énergie chimique en énergie électrique pendant la phase de décharge. Les électrodes, disposées dans un contenant, sont connectées électriquement à des bornes de sortie de courant qui assurent une continuité électrique entre les électrodes et un consommateur électrique auquel l'élément est associé. La batterie est formée d'une ou plusieurs branches montées électriquement en parallèle. Chaque branche comprend un ou plusieurs modules montés électriquement en série, et chaque module comprenant un ou plusieurs éléments électrochimiques montés électriquement en série ou en parallèle.

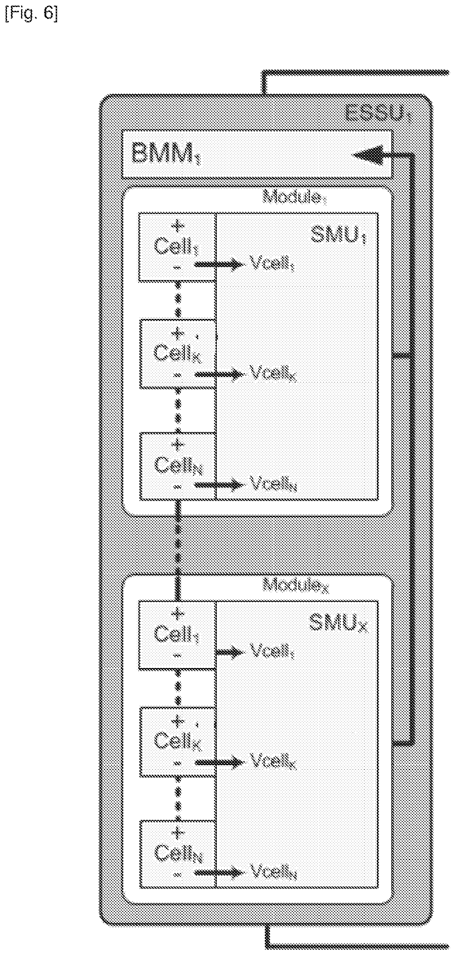

La figure 6 est un exemple de configuration d'une batterie dans laquelle N éléments électrochimiques (Cell1, Cell2,..., CelIN) sont connectés en série et disposés ensemble dans une même enceinte pour former un premier module (Module1). De manière similaire, N éléments électrochimiques sont connectés en série et disposés dans une xième enceinte pour former un xième module (Modulex). Les X modules sont connectés en série pour former une batterie (Bat). Les X modules constituent une branche du circuit, appelé ESSU (acronyme anglais de Energy Storage System Unit). Les éléments ne sont pas non plus nécessairement connectés en série mais peuvent aussi être connectés en parallèle. Il est également envisageable de connecter certains éléments entre eux en parallèle pour obtenir plusieurs associations d'éléments en parallèle puis de connecter ces associations d'éléments en série. De même, la batterie peut comprendre un nombre quelconque de modules, dans une configuration non nécessairement limitée à une connexion en série. Par exemple, la batterie peut comprendre p branches parallèles, chaque branche parallèle comprenant au moins un module constitué d'au moins un élément.

Les équipements auxiliaires d'une batterie sont des équipements participant soit à la sûreté, soit à la sécurité, soit aux performances, soit au fonctionnement de la batterie. Dans des exemples, au moins un équipement auxiliaire de la batterie est sélectionné parmi un système de détection et d'extinction d'incendie qui prévient la propagation du feu si un ou plusieurs modules électrochimiques prennent feu, un système de climatisation pour maintenir la batterie dans des conditions de température assurant son fonctionnement optimal, un système de surveillance des accès physiques à la batterie (par exemple le local dans lequel la batterie est entreposée), ou encore un système de mesure de la puissance électrique délivrée et/ou reçue par la batterie.

Chaque équipement auxiliaire est géré par un ou plusieurs micro-services de la plateforme en charge d'effectuer une fonction métier. Par exemple, le micro-service qui gère le système d'extinction d'incendie peut notamment avoir pour fonction métier de mesurer la température autour de la batterie et d'envoyer des alarmes en cas d'incendie à un micro-service offrant une interface utilisateur permettant de tenir informé un opérateur d'un problème sur la batterie. Par exemple, le micro-service gérant le système de climatisation peut avoir pour fonction métier de vérifier le bon fonctionnement de la climatisation et d'envoyer des alarmes en cas de défaillance. La fonction métier du micro-service associé au système de surveillance des accès physiques peut être d'envoyer des messages ayant un niveau de criticité dépendant des personnes pénétrant dans le local où est entreposée la batterie. Le système de mesure de la puissance électrique peut être géré par un micro-service dont la fonction métier est de restituer à l'opérateur la consommation de la puissance électrique aux bornes de la batterie : par exemple le micro-service fournit un service web ainsi que calculer l'énergie accumulée par la batterie. On comprendra que plusieurs équipements auxiliaires peuvent être gérés par un ou plusieurs mêmes micro-services ; dit autrement, la gestion de plusieurs équipements auxiliaires peut être regroupée dans un ou plusieurs mêmes micro-services.

On comprend que la plateforme de service selon l'invention peut être utilisée pour gérer des containers qui sont des assemblages de batterie. La plateforme peut gérer les différentes branches des batteries du container ainsi que les équipements auxiliaires. La plateforme permet par exemple d'envoyer des données de fonctionnement vers un micro-service de journalisation. Notamment, la plateforme de services selon l'invention permet d'agréger les données obtenues sur plusieurs équipements en les envoyant sur un micro-service de journalisation des données, ou encore sur un micro-service de stockage des données dans une base de données. Ainsi, la plateforme peut gérer plusieurs batteries, containers et offrir une vue agrégée des paramètres communs à ces équipements. Dans un exemple, chaque batterie d'un container comprend un micro-service de mesure de la puissance électrique instantanée délivrée par la batterie, l'ensemble des batteries d'un ou plusieurs containers envoyant les données vers un micro-service d'agrégation des données permettant à un opérateur de visualiser les données agrégées, par exemple à l'aide un service web de ce même micro-service d'agrégation des données des containers.

On comprend qu'une plateforme de service selon l'invention permet de faciliter la gestion d'une batterie et de ses équipements auxiliaires. Ainsi des fonctionnalités de gestion des batteries qui sont traditionnellement implémentées dans les BMS (Battery Management System, organes contribuant à la gestion des batteries), peuvent être déportées à l'extérieur des batteries afin d'en simplifier la conception et l'utilisation. Notamment, des calculs d'état de charge (SoC) et d'état de santé (SoH) peuvent être faits avec une plus grande précision grâce à la puissance de calcul beaucoup plus élevée de la plateforme de service par rapport aux BMS traditionnels.

Dans des exemples, on peut former un ensemble comprenant une ou plusieurs branches de batterie montées en parallèle formant une batterie, chaque branche de la batterie comprenant un ou plusieurs modules montés en série, chaque module comprenant un ou plusieurs éléments électrochimiques. L'ensemble comprend également un ou plusieurs ordinateurs, et une plateforme de service selon l'invention qui est exécutée par les ordinateurs de l'ensemble. Les micro-services de la plateforme de service implémentent des fonctions métiers de gestion de la batterie et de ses équipements auxiliaires : par exemple pour chaque fonction de gestion d'une batterie et pour chaque interface d'équipement auxiliaire de la batterie. L'ensemble comprend également un ou plusieurs organes de contrôle-commande des branches, qui exécutent des ordres de connexion/déconnexion et qui fournissent des mesures des paramètres des branches, des modules et des éléments électrochimiques. Un organe de contrôle-commande permet de superviser l'état électrique d'une branche, par exemple d'ouvrir ou de fermer le circuit de la branche.

Dans des exemples, au moins une des fonctions métier peut être sélectionnée parmi les suivantes. La première fonction métier est de déterminer si une ou plusieurs branches de la batterie sont connectées ou déconnectées au réseau électrique, c'est-à-dire à la sortie de la batterie. Une autre fonction métier est de calculer des consignes de courant applicables à la charge et à la décharge de la batterie. Une troisième fonction métier est de calculer le niveau de charge (SoC, acronyme anglais de State of Charge) de la batterie ; le micro-service implémente donc au moins un algorithme permettant de mesurer ou bien d'estimer le SoC. Une quatrième fonction est de calculer le niveau de santé (SoH, acronyme anglais de State of Health) ou niveau de vie de la batterie ; le micro-service implémente donc au moins un algorithme permettant de mesurer ou bien d'estimer le SoH de la batterie.

Dans un exemple, un niveau de charge (SoC) et un état de santé (SoH) pour une branche du circuit (ESSU) sont calculés par le BMS, et un niveau de charge (SoC) et un état de santé (SoH) par batterie sont calculés par la plateforme de micro-services.

Dans des exemples, l'ensemble comprend deux ou plus ensembles de branches de batteries montées en parallèle formant respectivement deux ou plus batteries. Cet ensemble avec au moins deux batteries peut comprendre un micro-service implémentant une fonction métier d'agrégation des données d'une ou plusieurs des autres fonctions métier précédemment citées. En d'autres termes, le micro-service d'agrégation agrège les données qui concernent chaque type de fonction métier. On comprend que l'agrégation des données peut être réalisée différemment selon la fonction métier, et qu'il peut y avoir un micro-service d'agrégation par fonction métier.

Dans des exemples, l'ensemble peut comprendre un ou plusieurs micro-services pouvant envoyer des données échangées via le système de communication unifié en direction d'un système de stockage distant pour y être stockées. Les données échangées peuvent par exemple être sélectionnées à l'aide d'une ou plusieurs des métadonnées présentes dans les messages transportant les données échangées. Le système de stockage peut être, mais n'est pas limité à, une base de données, un système de fichiers, un ou plusieurs serveurs de stockage formant un cloud. Le système de stockage distant peut être couplé avec un système d'apprentissage automatique pouvant effectuer son apprentissage sur les données stockées. Les données reçues sont donc autant d'observations permettant de construire un modèle, par exemple un modèle de l'usure de la batterie.

Dans des exemples, la plateforme de service de l'ensemble comprend en outre un micro-service de mise à jour des autres micro-services. Dans un exemple, le micro-service de mise à jour peut envoyer des requêtes aux autres micro-services afin de connaître leurs versions respectives, et en fonction des réponses aux requêtes, il peut déterminer quels micro-services doivent être mis à jour. Dans un exemple, la plateforme de micro-services comprend en outre un micro-service de mise à jour des logiciels des organes de contrôle-commande des branches. La décision de mettre à jour ou pas un organe de contrôle-commande peut être réalisée de la même façon que pour la mise à jour des micro-services.

## Revendications

1. Plateforme de services, implémentée par un ou plusieurs ordinateurs, de gestion d'une batterie et de ses équipements auxiliaires, comprenant :
• un ou plusieurs micro-services (42, 44), chaque micro-service ayant une structure générique normalisée comprenant :
∘ un sous-service implémentant une fonction métier, chaque fonction métier définissant un rôle spécifique rendu par le micro-service dans la gestion de la batterie et de ses équipements auxiliaires ;
∘ un sous-service de messagerie ;
• un système de communication unifié pour un échange de données et de messages,
dans laquelle chaque micro-service comprend en outre au moins une fonction de gestion du micro-service, l'une des au moins une fonction de gestion du micro-service étant une fonction de gestion de la configuration du micro-service,
dans laquelle le système de communication unifié comprend :
• l'utilisation, de sockets pour une communication inter-micro-service en local ou via un réseau TCP/IP, ce choix étant configuré par la fonction de gestion de la configuration du micro-service.

2. Plateforme de services selon la revendication 1, dans laquelle chaque micro-service comprend en outre :
∘ une interface utilisateur et/ou machine.

3. Plateforme de services selon l'une quelconque des revendications précédentes, dans laquelle ladite au moins une fonction de gestion est sélectionnée parmi :
• une fonction de journalisation du système exécutant le micro-service et/ou du micro-service exécuté ;
• une fonction de gestion d'alarme(s) émise(s) et/ou reçue(s) par le micro-service ;
• une fonction de sauvegarde et de restauration d'un état courant du micro-service.

4. Plateforme de services selon la revendication 3, comprenant en outre un service de centralisation des journaux sur lequel sont stockés des messages de journalisation mis en forme et envoyés par la fonction de journalisation.

5. Plateforme de services selon l'une quelconque des revendications précédentes, dans laquelle les sockets pour la communication inter- micro-service utilisent un mandataire sans état qui met en relation un micro-service publiant un ou des messages concernant un ou plusieurs sujets de la messagerie avec un ou plusieurs micro-services ayant souscrit auxdits un ou plusieurs sujets de la messagerie.

6. Plateforme de services selon l'une quelconque des revendications précédentes, dans laquelle le sous-service de messagerie comprend :
• une fonction de souscription à un ou plusieurs sujets de la messagerie ;
• une fonction de publication dans un sujet de la messagerie ;
• une fonction d'envoi de requête via la messagerie ;
• une fonction de réponse à une requête reçue via la messagerie.

7. Plateforme de services selon la revendication 6, dans laquelle la fonction de souscription comprend souscrire à un ou plusieurs sujets du sous-service de messagerie, mettre en forme et écrire les données contenues dans les messages associés audit un ou plusieurs sujets souscrits dans une base de données locale adaptée pour le stockage de données horodatées.

8. Plateforme selon l'une quelconque des revendications précédentes, dans laquelle le système de communication unifié est asynchrone, non-bloquant, et point à multipoints ou multipoints à point.

9. Plateforme de services selon l'une quelconque des revendications précédentes, dans laquelle un ou plusieurs services supplémentaires sont fournis par le système d'exploitation d'un ou plusieurs ordinateurs exécutant un ou plusieurs micro-services.

10. Plateforme de services selon l'une quelconque des revendications précédentes, dans laquelle chaque micro-service est exécuté comme un unique processus et chaque sous-service du micro-service est exécuté comme un thread.

11. Ensemble comprenant :
• une ou plusieurs branches de batterie montées en parallèle formant une batterie, chaque branche de la batterie comprenant un ou plusieurs modules montés en série, chaque module comprenant un ou plusieurs éléments électrochimiques ;
• au moins un équipement auxiliaire de la batterie;
• un ou plusieurs ordinateurs ;
• une plateforme de services selon l'une quelconque des revendications 1 à 10 implémentée par lesdits un ou plusieurs ordinateurs ; et
• un ou plusieurs organes de contrôle-commande des branches, qui exécutent les ordres de connexion/déconnexion et qui fournissent des mesures des paramètres des branches, des modules et des éléments électrochimiques.

12. Ensemble selon la revendication 11, dans lequel une ou plusieurs des fonctions métier sont sélectionnées parmi :
• la détermination de la connexion / déconnexion au réseau électrique d'au moins une branche de la batterie ;
• le calcul des consignes de courant applicables à la charge et à la décharge de la batterie ;
• le calcul du niveau de charge de la batterie ;
• le calcul du niveau de vie de la batterie.

13. Ensemble selon l'une des revendications 11 ou 12, comprenant en outre :
• deux ou plus ensembles de branches de batterie montées en parallèle formant respectivement deux ou plus batteries ;
• et dans lequel la plateforme de service comprend en outre un micro-service implémentant une fonction métier d'agrégation des données d'une ou plusieurs des autres fonctions métier.

14. Ensemble selon l'une quelconque des revendications 11-13, dans lequel la plateforme de service comprend en outre un ou plusieurs micro-services pouvant envoyer des données échangées sur le système de communication unifié en direction d'un système de stockage distant pour y être stockées, le système de stockage distant étant en outre couplé avec un système d'apprentissage automatique pouvant effectuer son apprentissage sur les données stockées.

15. Ensemble selon l'une des revendications 11-14, dans lequel la plateforme de service comprend en outre un micro-service de mise à jour des autres micro-services.

## Patentansprüche

1. Von einem oder mehreren Computern implementierte Dienstplattform zur Verwaltung einer Batterie und ihrer Hilfsausrüstungen, umfassend:
• einen oder mehrere Microservices (42, 44), wobei jeder Microservice eine normalisierte generische Struktur aufweist, umfassend:
o einen Unterdienst, der eine Geschäftsfunktion implementiert, wobei jede Geschäftsfunktion eine spezifische Rolle definiert, die von dem Unterdienst bei der Verwaltung der Batterie und ihrer Hilfsausrüstungen geleistet wird;
∘ einen Mitteilungsdienst-Unterdienst;
• ein einheitliches Kommunikationssystem für einen Austausch von Daten und Mitteilungen,
wobei jeder Microservice ferner mindestens eine Microservice-Verwaltungsfunktion umfasst, wobei eine der mindestens einen Microservice-Verwaltungsfunktion eine Microservice-Konfigurationsverwaltungsfunktion ist, wobei das einheitliche Kommunikationssystem Folgendes umfasst:
• die Verwendung, von Sockets für die Kommunikation zwischen Microservices lokal oder über ein TCP/IP-Netzwerk, wobei diese Wahl durch die Microservice-Konfigurationsverwaltungsfunktion konfiguriert wird.

2. Dienstplattform nach Anspruch 1, wobei jeder Microservice ferner Folgendes umfasst:
o eine Benutzer- und/oder Maschinenschnittstelle.

3. Dienstplattform nach einem der vorherigen Ansprüche, wobei die mindestens eine Verwaltungsfunktion ausgewählt ist aus:
• einer Funktion zur Protokollierung des Systems, das den Microservice ausführt, und/oder des ausgeführten Microservices;
• eine Verwaltungsfunktion von Alarm(en), der/die von dem Microservice gesendet und/oder empfangen wird/werden;
• eine Funktion zum Sichern und Wiederherstellen eines aktuellen Zustands des Microservices.

4. Dienstplattform nach Anspruch 3, ferner umfassend einen Zentralisierungsdienst der Protokolle, auf dem Protokollierungsmitteilungen gespeichert werden, die von der Protokollierungsfunktion formatiert und gesendet werden.

5. Dienstplattform nach einem der vorherigen Ansprüche, wobei die Sockets für die Kommunikation zwischen Microservices einen zustandslosen Proxy verwenden, der einen Microservice, der eine oder mehrere Mitteilungen zu einem oder mehreren Mitteilungsdienstthemen veröffentlicht, mit einem oder mehreren Microservices, die ein oder mehrere Themen des Mitteilungendienstes abonniert haben.

6. Dienstplattform nach einem der vorherigen Ansprüche, wobei der Mitteilungsunterdienst Folgendes umfasst:
• eine Abonnementfunktion zum Abonnieren eines oder mehrerer Themen des Mitteilungendienstes;
• eine Veröffentlichungsfunktion zum Veröffentlichen in einem Thema des Mitteilungendienstes;
• eine Sendefunktion zum Senden einer Anfragen über den Mitteilungendienst;
• eine Antwortfunktion zum Antworten einer Anfrage, die über den Mitteilungendienst empfangen wird.

7. Dienstplattform nach Anspruch 6, wobei die Abonnementfunktion ein Abonnieren eines oder mehrerer Themen des Mitteilungsunterdienstes, ein Formatieren und Schreiben von Daten, die in Mitteilungen enthalten sind, die mit dem einen oder den mehreren abonnierten Themen assoziiert sind, in eine lokale Datenbank umfasst, die für die Speicherung von mit Zeitstempeln versehenen Daten angepasst ist.

8. Plattform nach einem der vorherigen Ansprüche, wobei das einheitliche Kommunikationssystem asynchron, nicht blockierend und Punkt-zu-Mehrpunkt oder Mehrpunkt-zu-Punkt ist.

9. Dienstplattform nach einem der vorherigen Ansprüche, wobei ein oder mehrere zusätzliche Dienste von dem Betriebssystem eines oder mehrerer Computer bereitgestellt werden, auf denen ein oder mehrere Microservices ausgeführt werden.

10. Dienstplattform nach einem der vorherigen Ansprüche, wobei jeder Microservice als ein einzelner Prozess ausgeführt wird und jeder Unterdienst des Microservices als ein Thread ausgeführt wird.

11. Anordnung, umfassend:
• ein oder mehrere parallel montierte Batteriezweige, die eine Batterie bilden, jeder Zweig der Batterie umfassend ein oder mehrere in Reihe montierte Module, jedes Modul umfassend eine oder mehrere elektrochemische Elemente;
• mindestens eine Hilfsausrüstung der Batterie;
• einen oder mehrere Computer;
• eine Dienstplattform nach einem der Ansprüche 1 bis 10, die von dem einen oder den mehreren Computern implementiert wird; und
• ein oder mehrere Kontroll/Steuer-Organe der Zweige, die die Befehle zum Verbinden/Trennen ausführen und Messungen der Parameter der Zweige, Module und elektrochemischen Elemente bereitstellen.

12. Anordnung nach Anspruch 11, wobei eine oder mehrere der Geschäftsfunktionen ausgewählt sind aus:
• Bestimmen der Verbindung/Trennung von mindestens einem Zweig der Batterie mit dem Stromnetz;
• Berechnen der Stromsollwerte, die auf das Laden und Entladen der Batterie anwendbar sind;
• Berechnen des Ladezustands der Batterie;
• Berechnen der betrieblichen Lebensdauer der Batterie.

13. Anordnung nach einem der Ansprüche 11 oder 12, ferner umfassend:
• zwei oder mehrere Anordnungen von parallel montierten Batteriezweigen, die jeweils zwei oder mehrere Batterien bilden;
• und wobei die Dienstplattform ferner einen Mikroservice umfasst, der eine Geschäftsfunktion zur Aggregation von Daten aus einer oder mehreren der anderen Geschäftsfunktionen implementiert.

14. Anordnung nach einem der Ansprüche 11-13, wobei die Dienstplattform ferner einen oder mehrere Microservices umfasst, die über das einheitliche Kommunikationssystem ausgetauschte Daten zu einem entfernten Speichersystem senden können, um dort gespeichert zu werden, wobei das entfernte Speichersystem ferner mit einem maschinellen Lernsystem gekoppelt ist, das sein Lernen an den gespeicherten Daten durchführen kann.

15. Anordnung nach einem der Ansprüche 11-14, wobei die Dienstplattform zusätzlich einen Mikroservice zur Aktualisierung der anderen Mikroservices umfasst.

## Claims

1. A service platform that is implemented by one or more computer(s), for managing a battery and its auxiliary equipment units, the platform comprising:
• one or more micro-services (42, 44), each micro-service having a standardized generic structure comprising:
∘ a sub-service implementing a business function, each business function defining a specific role provided by the sub-service in the management of the battery and its auxiliary equipment units;
∘ a messaging sub-service;
• a unified communication system for enabling the exchange of data and messages,
wherein each micro-service further comprises at least one management function of the micro-service, one of the at least one management function of the micro-service being a management function of the configuration of the micro-service,
wherein the unified communication system comprises:
• the use of sockets for a communication inter-micro-service either local or via a TCP/IP network, this choice being configured by the management function of the micro-service.

2. The service platform according to claim 1, in which each micro-service in addition includes:
∘ a user and/ or machine interface.

3. The service platform according to any one of the preceding claims, wherein the said at least one management function is selected from among:
• a logging function of the system executing the micro-service and/ or of the micro-service being executed;
• an alarm management function of the alarm(s) sent and/ or received by the micro-service;
• a save and restore function of a current state of the micro-service.

4. The service platform according to claim 3, further including a log centralization service on which are stored log messages formatted and sent by the logging function.

5. The service platform according to any one of the preceding claims, wherein the sockets for inter-micro-service communication use a stateless proxy which connects a micro-service that is publishing one or more messages concerning one or more topics of the messaging system with one or more micro-services that have subscribed to the said one or more messaging system topics.

6. The service platform according to any one of the preceding claims, wherein the messaging sub-service includes:
• a subscription function for subscribing to one or more messaging system topics;
• a publish function for publishing to a topic of the messaging system;
• a send request function for sending a request via the messaging system;
• a response function for responding to a request received via the messaging system.

7. The service platform according to claim 6, wherein the subscription function includes subscribing to one or more topics of the messaging sub-service, formatting and writing the data contained in the messages associated with the said one or more topics subscribed to a local database that is suitable for the storing of time-stamped data.

8. The platform according to any one of the preceding claims, wherein the unified communication system is asynchronous, non-blocking, and point to multipoint or multipoint to point.

9. The service platform according to any one of the preceding claims, wherein one or more additional services are provided by the operating system of one or more computers executing one or more micro-services.

10. The service platform according to any one of the preceding claims, wherein each micro-service is executed as a single process and each sub-service of the micro-service is executed as a thread.

11. An assembly comprising:
• one or more battery branches connected in parallel and forming a battery, each branch of the battery comprising one or more modules connected in series, each module comprising one or more electrochemical elements;
• at least one auxiliary equipment unit of the battery;
• one or more computers;
• a service platform according to any one of claims 1 to 10 implemented by the said one or more computers; and
• one or more control-command components of the branches, which execute the connection/ disconnection orders and which provide measurements of the parameters of the branches, the modules, and the electrochemical elements.

12. The assembly according to claim 11, wherein one or more of the business functions are selected from the following:
• determination of the connection/ disconnection to/from the electrical network of at least one branch of the battery;
• computation of the current setpoints applicable to the charging and the discharging of the battery;
• computation of the level of charge of the battery;
• computation of the level of battery life.

13. The assembly according to one of claims 11 or 12, further including:
• two or more assemblies of battery branches connected in parallel respectively forming two or more batteries;
• and in which the service platform in addition comprises a micro-service implementing a data aggregation business function for aggregating the data from one or more of the other business functions.

14. The assembly according to any one of the claims 11-13, wherein the service platform in addition includes one or more micro-services capable of sending the data exchanged over the unified communication system to a remote storage system in order to be stored therein, the remote storage system moreover also being coupled with a machine learning system capable of effectuating its training on the stored data.

15. The assembly according to one of the claims 11-14, wherein the service platform in addition includes a service update micro-service for updating the other micro-services.
